# EUROPÄISCHE PATENTSCHRIFT

(11) **EP 0 960 753 B1**
(45) Veröffentlichungstag und Bekanntmachung des Hinweises auf die Patenterteilung: **21.09.2005**
(21) Anmeldenummer: 99108899.8
(22) Anmeldetag: 05.05.1999
(51) Int. Cl.: B60G 21/05

(54) **Verbundlenkerachse**
Twist beam axle
Essieu à traverse déformable en torsion

(30) Priorität: 26.05.1998 DE 29809241 U
(43) Veröffentlichungstag der Anmeldung: 01.12.1999
(73) Patentinhaber: BENTELER AG, D-33104 Paderborn (DE)
(72) Erfinder: Streubel, Wolfgang, 32756 Detmold (DE); Klasfauseweh, Udo, 33334 Gütersloh (DE); Härtel, Wulf, 32760 Detmold (DE)
(74) Vertreter: Ksoll, Peter

(56) Entgegenhaltungen:
- EP-A- 0 229 576
- DE-A- 4 116 837
- DE-C- 3 412 578
- DE-C- 19 501 508
- DE-C- 19 653 959
- DE-U- 29 719 347
- US-A- 5 381 850
- PATENT ABSTRACTS OF JAPAN vol. 017, no. 288 (M-1423), 3. Juni 1993 (1993-06-03) & JP 05 016628 A (MITSUBISHI MOTORS CORP), 26. Januar 1993 (1993-01-26)
- PATENT ABSTRACTS OF JAPAN vol. 016, no. 306 (M-1276), 6. Juli 1992 (1992-07-06) & JP 04 085121 A (MAZDA MOTOR CORP), 18. März 1992 (1992-03-18)

## Beschreibung

Die Erfindung betrifft eine Verbundlenkerachse für Kraftfahrzeuge gemäß den Merkmalen im Oberbegriff des Anspruchs 1.

Durch die EP 0 229 576 B1 ist eine aus einem Rohr hergestellte Verbundlenkerachse bekannt, deren radführende Längslenker parallel zueinander verlaufen und unverformt rohrförmig sind. Der die Längslenker verbindende biegesteife, aber torsionsweiche Querträger weist bis auf die ebenfalls kreisrunden rohrförmigen Enden einen L-, V-, T-, U-, X- oder H-förmigen Querschnitt auf.

Der Einsatz einer Verbundlenkerachse wie vorstehend beschrieben bereitet in der Praxis bislang wegen der geforderten Lebensdauer jedoch Schwierigkeiten. Ursache für das Nichterreichen einer befriedigenden Lebensdauer ist bei U- und V-förmigen Querträgern die hohe Belastung in den Übergangsbereichen zwischen den verformten und nicht verformten Längenabschnitten, so dass es hier bei einer Dauerbelastung zu einem vorzeitigen Ausfall kommt.

Ein demgegenüber bereits wesentlich verbesserter Querträger für eine Verbundlenkerachse geht aus der DE 196 53 959 C1 hervor.

Zum Stand der Technik zählt durch die DE 35 11 495 A1 ferner ein Radführungslenker für Kraftfahrzeuge, welcher einen schaumkerngestützten Grundkörper umfasst. Der aus Faserverbundmaterial hergestellte Radführungslenker weist einen Grundkörper aus Hartschaum entsprechend der Grundform des Lenkers auf. Um diesen Grundkörper herum werden Verstärkungen wie Innen- und Außenprofilleisten sowie Deckplatten maßgerecht und in einer Endform herum gebaut.

Weiterhin zeigt DE 4116837 A1 einen aus einen U-förmig gebogenen, innen ausgeschäumten Rohr bestehenden Drehstab-Stabilisator.

Der Erfindung liegt ausgehend vom Stand der Technik die Aufgabe zugrunde, eine hochbelastbare Verbundlenkerachse zu schaffen, welche im Steifigkeits- und Festigkeitsverhalten verbessert ist und eine höhere Lebensdauer erreicht.

Die Lösung dieser Aufgabe besteht nach der Erfindung in einer Verbundlenkerachse mit den Merkmalen des Anspruchs 1.

Kernpunkt der Erfindung bildet die Maßnahme, den Querträger der Verbundlenkerachse in den Übergangsabschnitten vom V- oder U-förmigen Torsionsabschnitt auf die annähernd kreisförmig oder oval ausgebildeten rohrförmigen Endabschnitte mit einer inneren partiellen Ausschäumung zu versehen.

Hierdurch wird eine Verstärkung der Verbundlenkerachse und eine Erhöhung ihrer Lebensdauer erreicht.

Die gezielte Verstärkung bzw. Versteifung in den Übergangsabschnitten des Querträgers vom V- oder U-förmigen Querschnitt zu den Enden besteht aus einem Werkstoff, dessen Volumen zu einem hohen Anteil aus Hohlräumen (Blasen, Poren) besteht. Hierdurch wird eine wirksame Erhöhung der Steifigkeit der Übergänge erreicht bei gleichzeitiger Steigung des Energieabsorptions- bzw. -umwandlungsvermögens. Die Dichte der Ausschäumung in den Übergangsabschnitten des Querträgers kann gezielt auf die Verbundlenkerachse bzw. den Typ eines Kraftfahrzeugs abgestimmt werden.

Wie praktische Versuche gezeigt haben, führt die Ausschäumung zu einer höheren Energieaufnahme bei schwerer Belastung. Dies wirkt sich insbesondere bei einem Crash positiv aus.

Ferner besitzt die erfindungsgemäße Verbundlenkerachse ein verbessertes Frequenzverhalten hinsichtlich wechselnder Zug- und Druckbelastungen. Die Gesamtkonfiguration der Verbundlenkerachse erreicht eine auf dynamische Belastungen abgestimmte Auslegung der Widerstandsmomente. Dies wird maßgeblich durch die Ausschäumung im Übergangsbereich vom Torsionsabschnitt zu den Enden des Querträgers beeinflusst. Der sich durch die Ausschäumung ergebende bereichsweise Verbund ermöglicht eine effiziente Überleitung der Torsions- und Biegekräfte von den Längslenkern in den Querträger, wo sie im Torsionsabschnitt kompensiert werden. Damit besitzt die erfindungsgemäße Verbundlenkerachse ein besonders gutes statisches und dynamisches Lastverhalten und erreicht eine hohe Lebensdauer.

Die Erfindung führt ferner zu einer Gewichtsoptimierung und einer Materialreduzierung an der Verbundlenkerachse. Bei Reduzierung der Wanddicken oder Querschnitte des Querträgers kann bei identischer Bauteilfestigkeit durch die innere parzielle Ausschäumung das Gewicht verringert und die Bauraumnutzung optimiert werden.

Auch ist es durch die innere Aussteifung in den Übergangsabschnitten möglich, auf zusätzliche Knotenbleche oder ähnlich mechanische Konstruktionen zwischen Querträger und Längslenker zu verzichten. Hieraus ergibt sich eine weitere Gewichtseinsparung gegenüber vergleichbaren Akzenten.

Nach den Merkmalen des Anspruchs 2 besteht die Ausschäumung aus einem Mehrkomponenten-Kunststoffschaum. Für die Praxis bietet sich ein Schaum auf Kunststoffbasis, wie beispielsweise Epoxid-, Polypropylan- oder PolyurethanSchaum an. Die Schäume werden entweder in die Bauteile eingespritzt oder im Bauteil selbst aufgeschäumt. In der Praxis ist es ferner möglich, den Schaumausgangsstoff in den Übergangsabschnitten kristallin aufzutragen und anschließend energetisch aufzuschäumen. Dies erfolgt üblicherweise durch Erwärmung.

Die Alternative des Anspruchs 3 sieht vor, einen Metallschaum einzusetzen.

Hierbei bieten sich Aluminiumschaum oder Stahlschäume an.

Grundsätzlich können aber auch andere Metallschäume, vorzugsweise Leichtmetallschäume, wie Magnesiumschaum, eingesetzt werden. Des Weiteren kann auch ein Mehrkomponentenschaum, beispielsweise aus Aluminium und Magnesium zum Einsatz gelangen. Die Komponenten des Metallschaums können dabei funktionell auf die Ausgestaltung einer Verbundlenkerachse und deren Belastungsverhalten abgestimmt werden.

Bei der Herstellung von Metallschaum kommt ein Metallpulver oder ein Metalllegierungspulver mit einer Teilchengröße von vorzugweise ≤ 300 µm zum Einsatz. Dieses wird mit geringen Mengen eines pulvermetallurgischen Treibmittels, wie beispielsweise Titanhybrid, einer Teilchengröße ≤ 65 µm vermischt. Die Mischung bewirkt eine homogene Verteilung des gasabspaltenden Treibmittels im Metallpulver. Anschließend wird die Metallpulvermischung verdichtet oder direkt in den Querträger eingebracht.

Die Aufschäumung erfolgt im nächsten Arbeitsschritt durch Erwärmung des Querträgers oder der Übergangsabschnitte.

In die Schaummatrix der Ausschäumung können zusätzlich auch versteifende Fasern eingebettet sein, wie dies Anspruch 4 vorsieht. Die Fasern können aus Kunststoff oder Metall sein. Auch der Einsatz von mineralischen Fasern ist denkbar.

Der Werkstoff der Ausschäumung ist inert, dass heißt, seine Bestandteile sollen den Werkstoff des Querträgers bzw. der Verbundlenkerachse nicht angreifen und korrodieren. Zweckmäßigerweise ist die Ausschäumung korrosionshemmend, wie dies Anspruch 5 vorsieht. Dies kann durch den Zusatz von geeigneten Additiven gefördert werden.

Insgesamt ist die Verbundlenkerachse rationell und kostengünstig herzustellen. Durch die Ausschäumung der Übergangsabschnitte des Querträgers entsteht dort ein Verbundbauteilbereich mit erhöhter Steifigkeit. Hierdurch wird das dynamische und statische Lastverhalten der Verbundlenkerachse verbessert. Ferner werden Geräusch-, Vibrations- und Festigkeitseigenschaften im Übergangsbereich gesteigert.

Die Erfindung ist nachfolgend anhand des in den Zeichnungen dargestellten Ausführungsbeispiels näher beschrieben. Es zeigen:
- Figur 1: eine perspektivische Ansicht auf einen Querträger mit Abschnitten der Längslenker;
- Figur 2: einen Querträger im vertikalen Längsschnitt;
- Figur 3A: einen vertikalen Querschnitt durch die Darstellung der Figur 2 entlang der Linie A-A;
- Figur 3B: einen vertikalen Querschnitt durch die Darstellung der Figur 2 entlang der Linie B-B;
- Figur 3C: einen vertikalen Querschnitt durch die Darstellung der Figur 2 entlang der Linie C-C und
- Figur 3D: einen vertikalen Querschnitt durch die Darstellung der Figur 1 entlang der Linie D-D.

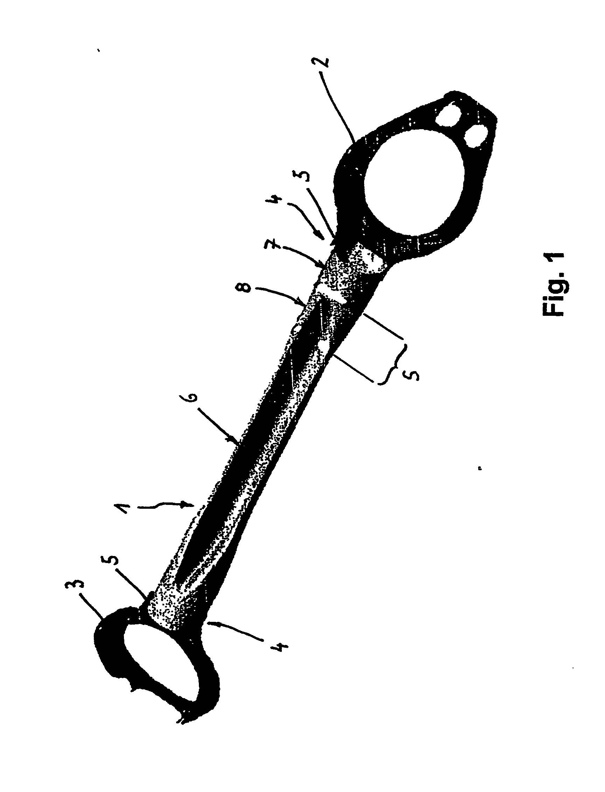

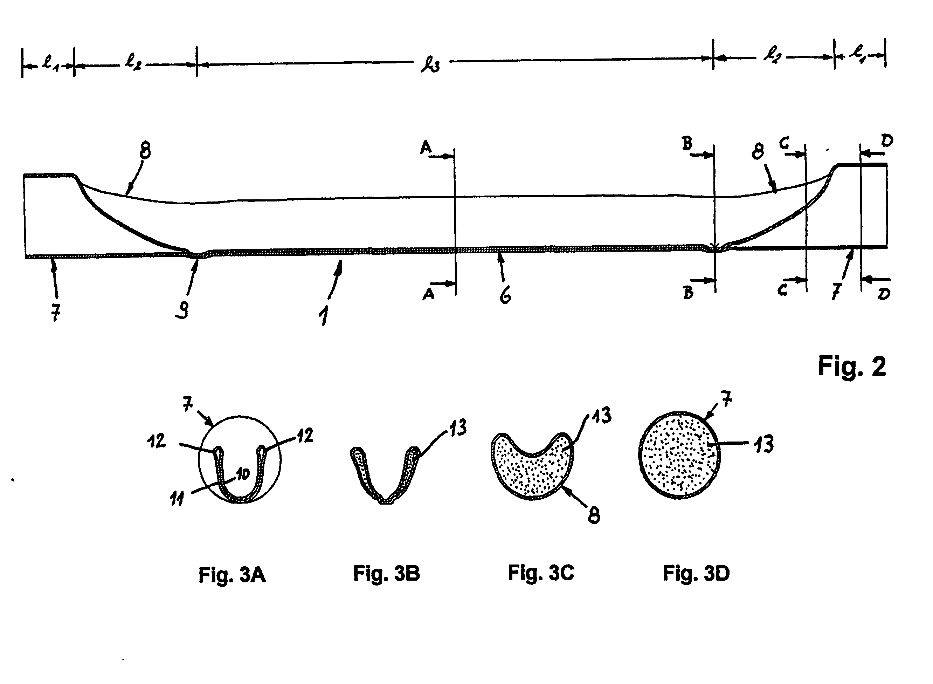

In den Figuren 1 und 2 ist mit 1 ein Querträger für eine ansonsten nicht näher veranschaulichte Verbundlenkerachse eines Personenkraftwagens bezeichnet.

Der Querträger 1 verbindet zwei Längslenker 2, 3, von denen in der Figur 1 der Übersicht halber jeweils nur ein Ausschnitt aus dem Anbindungsbereich zum Querträger 1 dargestellt ist. Die Längslenker 2, 3 verfügen im Anbindungsbereich über eine an die Querschnittskonfiguration der Enden 4 des Querträgers 1 angepasste Aufnahme 5. In die Aufnahmen 5 ist der Querträger 1 mit den Enden 4 eingesteckt und gefügt.

Der Querträger 1 weist einen gemuldeten doppelwandigen Torsionsabschnitt 6 auf mit einem im wesentlichen V-förmigen Profil. Das V-Profil ist durch Umformen eines ursprünglich kreisrunden Rohrs entstanden, dessen Querschnitt in den Endabschnitten 7 über die Länge l₁ aufrechterhalten ist (Figur 2). Der kreisrunde Querschnitt geht in den Übergangsabschnitten 8 mit der Länge l₂ kontinuierlich in den U-förmig gemuldeten Querschnitt über, der sich über den mittleren Torsionsabschnitt 6 des Querträgers 1 mit der Länge l₃ erstreckt.

Die Länge l₃ ist deutlich größer als die Längen l₁ und l₂. Der kontinuierliche Übergang vom kreisrunden Querschnitt in den Endabschnitten 7 über die Übergangsabschnitte 8 auf den gemuldeten Querschnitt im Torsionsabschnitt 6 ist in den Figuren 3A bis 3D zu erkennen.

In der Figur 2 ist ferner zu erkennen, dass der Querträger 1 am Übergang vom Torsionsabschnitt 6 auf den Übergangsabschnitt 8 mit sickenartigen Verprägungen 9 versehen ist.

Während im Torsionsabschnitt 6 die Muldenwände 10, 11 bis auf die endseitigen Biegeradien 12 (Figur 3A) eng aneinander liegen, wächst ihr Abstand vom Torsionsabschnitt 6 in Richtung auf die Endabschnitte 7 (Figur 3A - 3D).

In den Übergangsabschnitten 8 ist der Querträger 1 durch eine innere partielle Ausschäumung 13 gezielt ausgesteift. Die Ausschäumung 13 kann aus einem Kunststoff oder Metallschaum bestehen. Wie aus der Figur 2 zu erkennen ist, reicht die Ausschäumung 13 bis etwa zur Mitte der Endabschnitte 7 entsprechend der Schnittebene D - D. In der Figur 1 ist der ausgeschäumte Bereich mit S gekennzeichnet.

Die Ausschäumung 13 bildet einen Versteifungskörper bzw. Verbundkörper und gewährleistet eine wirksame Erhöhung der Steifigkeit in den Übergangsabschnitten 8. Positiv wirkt sich die partiell wirkende Ausschäumung 13 auch auf das Energieabsorbtions- bzw. -umwandlungsvermögen aus. Darüber hinaus wird durch die Ausschäumung 13 die Lebensdauer der im Betrieb dynamisch beanspruchten und unter schwingender Belastung stehenden Verbundlenkerachse erhöht.

### Bezugszeichenaufstellung

- 1 -: Querträger
- 2 -: Längslenker
- 3 -: Längslenker
- 4 -: Ende v. 1
- 5 -: Aufnahe v. 2 bzw. 3
- 6 -: Torsionsabschnitt v. 1
- 7 -: Endabschnitt v. 1
- 8 -: Übergangsabschnitt
- 9 -: Verprägung
- 10 -: Muldenwand
- 11 -: Muldenwand
- 12 -: Biegeradius
- 13 -: Ausschäumung

- l₁ -: Länge v. 7
- l₂ -: Länge v. 7
- l₃ -: Länge v. 7

- **S -**: **ausgeschäumter Bereich**

## Patentansprüche

1. Verbundlenkerachse für Kraftfahrzeuge, welche zwei durch einen Querträger (1) verbundene Längslenker (2,3) umfasst, wobei der Querträger (1) einen im wesentlichen V- oder U-förmig gemuldeten doppelwandigen Torsionsabschnitt (6) mit annähernd kreisförmig oder oval ausgebildeten rohrförmigen Endabschnitten (7) und sich von den Endabschnitten (7) zum Torsionsabschnitt (6) im Querschnitt kontinuierlich verändernden Übergangsabschnitten (8) besitzt, **dadurch gekennzeichnet, dass** der Querträger (1) in den Übergangsabschnitten (8) eine innere partielle Ausschäumung (13) aufweist.

2. Verbundlenkerachse nach Anspruch 1, **dadurch gekennzeichnet, dass** die Ausschäumung (13) aus einem Mehrkomponenten-Kunststoffschaum besteht.

3. Verbundlenkerachse nach Anspruch 1, **dadurch gekennzeichnet, dass** die Ausschäumung (13) aus einem Metallschaum, insbesondere einem Aluminiumschaum oder einem Stahlschaum, besteht.

4. Verbundlenkerachse nach einem der Ansprüche 1 bis 3, **dadurch gekennzeichnet, dass** in die Aufschäumung (13) versteifende Fasern eingebettet sind.

5. Verbundlenkerachse nach einem der Ansprüche 1 bis 4, **dadurch gekennzeichnet, dass** die Ausschäumung (13) korrosionshemmend ist.

## Claims

1. A semi-rigid axle for motor vehicles, comprising two arms (2, 3) connected by a cross member (1), wherein the cross member (1) has an essentially V- or U-shaped hollowed double-walled torsion section (6) with near circular or oval shaped tubular end sections (7) and having transitional sections (8) with a continuously varying cross section from the end sections (7) to the torsion section (6), **characterized in that** the cross member (1) has a partial internal foamed filling (13) in the transitional sections (8).

2. A semi-rigid axle according to claim 1, **characterized in that** the foamed filling (13) consists of a multi-component plastic foam.

3. A semi-rigid axle according to claim 1, **characterized in that** the foamed filling (13) consists of a metal foam, in particular an aluminium foam or a steel foam.

4. A semi-rigid axle according to one of claims 1 to 3, **characterized in that** stiffening fibres are embedded in the foamed filling (13).

5. A semi-rigid axle according to one of claims 1 to 4, **characterized in that** the foamed filling (13) is corrosion inhibiting..

## Revendications

1. Essieu à traverse déformable en torsion pour véhicules automobiles, qui comprend deux bras oscillants longitudinaux (2,3) raccordés à une traverse (1), dans lequel la traverse (1) possède un tronçon de torsion à double paroi en auge sensiblement en forme de V ou de U avec des tronçons d'extrémité (7) approximativement circulaires ou ovales et des tronçons de transition (8) se modifiant de façon continue dans la section transversale depuis les tronçons d'extrémité (7) jusqu'à la section de torsion (6),
**caractérisé en ce que** la traverse (1) comporte un garnissage interne partiel de mousse (13).

2. Essieu à traverse déformable en torsion selon la revendication 1,
**caractérisé en ce que** le garnissage de mousse (13) consiste en une mousse en matière synthétique à plusieurs composants.

3. Essieu à traverse déformable en torsion selon la revendication 1,
**caractérisé en ce que** le garnissage de mousse (13) consiste en une mousse métallique, en particulier une mousse d'aluminium ou une mousse d'acier.

4. Essieu à traverse déformable en torsion selon l'une des revendications 1 à 3,
**caractérisé en ce que** des fibres de renforcement sont enrobées dans le garnissage de mousse.

5. Essieu à traverse déformable en torsion selon l'une des revendications 1 à 4,
**caractérisé en ce que** le garnissage de mousse (13) est inhibiteur de corrosion.
